# EUROPEAN PATENT SPECIFICATION

(11) **EP 1 334 029 B1**
(45) Date of publication and mention of the grant of the patent: **19.09.2007**
(21) Application number: 01975109.8
(22) Date of filing: 05.10.2001
(51) Int. Cl.: B65B 51/22, B65B 57/08, B65B 3/06

(54) **SPEED INDEPENDENT SEALING**
GESCHWINDIGKEITSUNABHÄNGIGES SCHWEISSEN
SCELLEMENT INDEPENDANT DE LA VITESSE

(30) Priority: 13.10.2000 SE 0003712
(43) Date of publication of application: 13.08.2003
(73) Proprietor: Tetra Laval Holdings & Finance SA, 1009 Pully (CH)
(72) Inventor: HOLMSTRÖM, Gert, 224 68 Lund (SE); BERG, Karin, 240 13 Genarp (SE); WIBERG, Anders, 231 53 Trelleborg (SE)
(74) Representative: Forsberg, Lars-Ake
(86) International application number: PCT/SE2001/002182
(87) International publication number: WO 2002/030754

(56) References cited:
- EP-A1- 0 339 134
- GB-A- 2 304 669
- US-A- 5 025 123
- US-A- 5 138 815

## Description

### Technical Field

The present invention concerns a method and a device for sealing packages during continuous movement. The method is normally to be used in a form and seal machine.

### State of the Art

Packages are raised and sealed at one edge, normally the top in a first line of a form and seal machine. After the sealing the packages goes through one or more fillers. From the one or more fillers the packages are returned to a second line of the form and seal machine where the other edge of each package is sealed. In this description the two lines of the form and seal machine and the one or more fillers are commonly referred to as the filling machine.

Previously separate induction heating transformers were used for different speeds of the machine. Thus, application of induction heating was done with a continuous power for each speed during the package movement. It was necessary to have different combinations of transformers and capacitors to get the correct phase-shift of the signal for the different speeds. When the speed of the machine was changed, e.g. due to another type or sizes of packages, the transformers were to be changed. The earlier methods resulted in wasting of a large number of packages during acceleration and retardation.

US 5,025,123 describes a device for sealing lids to packages. The device comprises a plurality of packages and inductor arrangements connected to a revolving table. Each inductor arrangement is engaged with a package. At decided fixed positions, heating positions, along one turn of the table, the inductor arrangement engages in contact with current. A ring of the inductor is then energized and can be used to seal the lid. In that way the energizing of the inductors is provided in "pulse form" since the package with inductor is moved from one position to the next by the revolving table. However, in this machine the pulse length is directly dependent on the package speed (or revolving speed) as there are a fixed number of segments (heating stations) that provide current to the inductors in one turn of the table and the heating stations have fixed length. However, a variation in the speed would be troublesome. For example, a higher speed would result in shorter pulse time, which provide a risk that the seal is not properly made. Inevitably, a higher speed would require an increase in the power supplied in order to obtain the same quality of the seal.

### Summary of the Invention

There is a need for a speed independent sealing of packages. The sealing should be made during continuous movement of the packages.

As an example, a new form and seal machine has been developed to operate in a number (3-5) of fixed speeds. This machine is to fit in a packaging line for retortable food products. To improve the machine to work better together with existing filling technologies used in the business, demands have been raised to make the machine more flexible in terms of speed and, thus to be able to run in varying not pre-fixed speeds.

Thus, one object of the invention is to have a speed independent sealing.

A further object is to seal with the same equipment during different speeds and during acceleration and retardation.

In the method of the present invention packages are sealed during continuous movement. A transportation means drives a row of packages through a sealing station comprising a stationary inductor driven in a pulse form. The invention is characterised in that every package is affected by a plurality of pulses, that the pulses are of a fixed length and that the time between the pulses vary depending on the speed of the row of packages.

A PLC system is used to control the pulses of the inductor. The PLC system uses information from a motor drive and an encoder, respectively connected to the motor driving the transportation means.

As stated above the top of each package is normally first sealed and thus the package is feed upside down. The package is then filled with the goods, whereafter the bottom of the package is sealed. The sealing of both the top and the bottom takes place in the form and seal machine. Thus, for each form and seal machine there will be two sealing stations, both normally controlled by the PLC system.

### Brief Description of the Drawings

The invention will be described further below with reference to the enclosed drawings.

Fig. 1 is a principal view of a sealing station in which the present invention may be used.

Fig. 2 is a diagram showing an example of the pulses of the inductor affecting each package.

### Detailed Description of the Invention

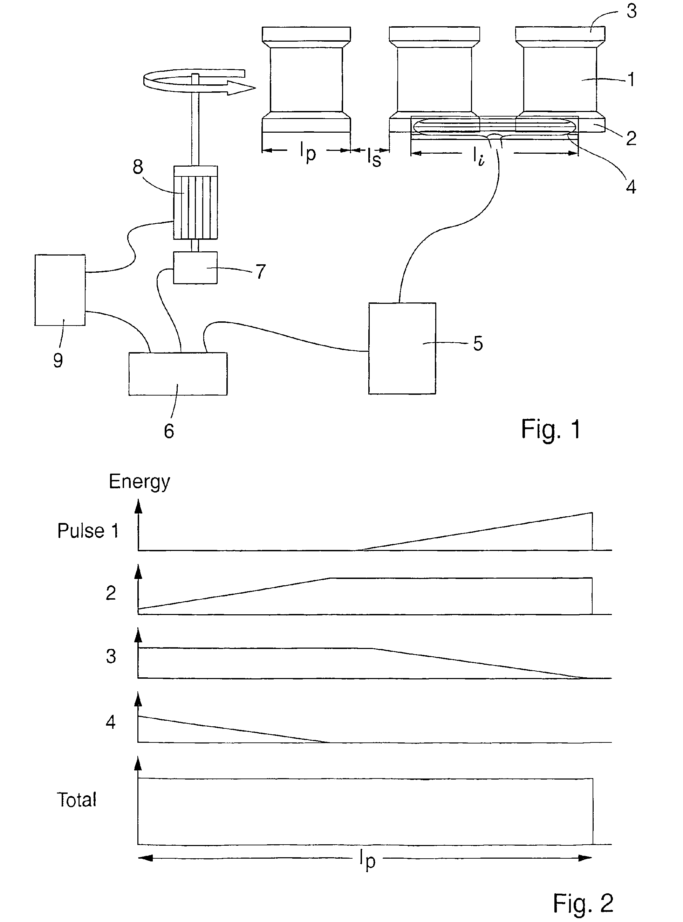

In Fig. 1 a row of packages 1 are indicated. The row of packages 1 is feed at a constant speed in normal use. The speed may vary depending on the type of packages 1 and the goods to be filled in the packages 1. The packages 1 are arranged on some kind of transportation means (not shown) driven by a motor 8. The transportation means may be a chain having means for receiving each package 1. The motor 8 is controlled by a motor drive 9. Furthermore, an encoder 7 is connected to the motor 8. The encoder 7 and the motor drive 9 are connected to a PLC (programmable logic controller) system 6. The PLC system 6 is also connected to a generator 5 for induction heating (often referred to as IH generator 5 below). The IH generator 5 is feeding an inductor 4 at a sealing station for the packages 1. The inductor 4 normally consists of two inductor plates, one on each side of the package 1 in the sealing station.

In practice the encoder 7 normally comprises a disc rotating with the motor 8. In one embodiment an encoder 7 giving 256 pulses per rotation is used. The 256 pulses are set to correspond to 2 packages and the space between them. The position and speed of the packages 1 are given to the PLC system 6 by means of the encoder 7 and the motor drive 9, respectively. This information is used by the PLC system to control the IH generator 5 and ultimately the inductor 4.

Depending on e.g. the capacity of the filler or fillers, the size of the packages 1 and the form of the goods to be filled in the packages 1 the transportation means will be driven at different speeds. Thus the same filling machine may be driven in varying speeds.

In Fig. 1 a row of packages 1 pass an inductor 4. Each package 1 has a lower edge 2 and an upper edge 3. Normally one of the edges are sealed first, then the package is filled and finally the other edge is sealed. The sealing is done by means of the inductor 4 heating up a metal, usually aluminium, in the edge area. When the aluminium is heated a plastic layer on each side of the edge area will be heated by the aluminium and melt. After the inductor 4 a number of pressure rolls (not shown) presses the edge together, whereby the heated plastic will melt together. The edge of each package 1 has a length lₚ and the packages 1 of the row are separated by a space of a length lₛ. The inductor 4 has a length of lᵢ in the feeding direction of the packages 1. The length lᵢ of the inductor 4 is the sum of the length lₚ of one package 1 and the distance lₛ between two adjacent packages 1, i.e lᵢ=lₚ+lₛ.

The sealing system of the present invention is intended for a continuously moving row of packages 1. The induction heating is applied in pulses given from the IH generator 5 to the inductor 4. The induction heating is applied in pulses with a fixed length. The time between the pulses vary depending on the speed of the row of packages 1. The applied power is also slightly adjusted according to the speed, i.e. the power is somewhat lower at higher speeds. This is done to compensate for the difference in cooling time between application of induction heating and the pressure rolls. The pulses are started by the PLC system 6. The position of the packages 1 is supervised by the encoder 7 connected to the PLC system 6.

In Fig. 2 the sealing of one package is shown in a diagrammatic form. At the first pulse (the uppermost curve) the package 1 has just come into the area of the inductor 4 and, thus, only the right part of the lower edge 2 (as shown in Fig. 1) will be affected by the inductor 4. In the pause between the first and second pulses the package 1 has moved further to the right and as shown by the second curve a larger part of the lower edge 2 will be affected by the inductor 4 in the sealing station. For the third and fourth pulses the package 1 has moved even further to the right for each pulse. It should be noted that in the position where the energy of the first pulse starts to increase the energy of the third pulse starts to decrease. The same is true for the second and fourth pulses. When the package 1 leaves the area of the inductor 4 the lower edge 2 will have been given a constant induction heating over its entire length lₚ. This is reflected in the lowermost curve of Fig. 2 showing the total energy given by the four pulses shown in the four upper curves of Fig. 2. In this case the energy is applied to the package 1 by means of two pulses per inductor length lᵢ, i.e. each package 1 is affected by a number of partial pulses (pulses 1 to 4 of Fig. 2), the sum of which corresponds to two pulses over the entire length of the package 1. In the example of Fig. 2 the speed of the filling machine is set to 24 000 packages per hour, i.e. 24 000 packages are sealed in one hour. The pulse time is set to 64 ms and the pause between the pulses will become 11 ms.

A person skilled in the art realises that the number of pulses per inductor length lᵢ may be varied. For an encoder with 256 pulses per revolution the number of pulses per inductor length lᵢ is preferably 2, 4, 8, 16 etc, i.e. equally divisible with 256. The slope at the start or end of each curve depends on the speed and thus the distance travelled by the package during the duration of the pulse.

At start up the position of the first package 1 coming into the area of the inductor 4 is used to trigger the sealing system. As the starting point and the speed of the packages 1 are known the PLC system 6 will control the pulses to the inductor 4 based on this information. The pulse length is set in relation to the highest possible speed in such a way that the pulses do not interfere. As the frequency of the pulses are related to the speed of the packages 1 the sealing will work both during acceleration and retardation and if the speed is fluctuating. The sealing effect during acceleration and retardation is improved if the number of pulses per package is increased. In the example of Fig. 2 only two pulses are shown for the sake of simplicity. Normally, 4 to 16 pulses per package will be used.

## Claims

1. A method of sealing packages (1) during continuous movement, in which a row of packages (1) is driven by means of a motor (8) through a sealing station comprising a stationary inductor (4) driven in a pulse form, **characterized in that** every package is affected by a plurality of pulses, that the pulses are of a fixed length and that the time between the pulses vary depending on the speed of the row of packages (1).

2. The method of claim 1, **characterized in that** a PLC system (6) is used to control the feeding of the inductor (4) by means of an IH (induction heating) generator (5).

3. The method of claim 2, **characterized in that** information regarding speed and position of the packages (1) is given to the PLC system (6).

4. The method of claim 3, **characterized in that** the information regarding speed and position of the packages (1) is given by means of a motor drive (9) and an encoder (7).

5. The method of any of the previous claims, **characterized in that** the applied power is adjusted depending on the speed.

6. The method of any of the previous claims, **characterized in that** each package (1) of the row of packages (1) has the same length (lₚ) in the feeding direction and that the packages (1) are separated by a distance (lₛ) from each other.

7. The method of claim 6, **characterized in that** the length (lᵢ) of the inductor (4) in the feeding direction of the packages (1) is the same as the length (lₚ) of one package plus the length (lₛ) of the space between two adjacent packages (1).

8. The method of any of the previous claims, **characterized in that** each package is given a constant sealing energy throughout the length (lₚ) of the package (1) .

9. The method of any of the previous claims, **characterized in that** the first package (1) of the row of packages (1) triggers the sealing system at start-up.

## Patentansprüche

1. Verfahren zum Versiegeln von Verpackungen (1) während einer kontinuierlichen Bewegung, bei dem eine Reihe von Verpackungen (1) mithilfe eines Motors (8) durch eine Versiegelungsstation, die einen impulsförmig angetriebenen stationären Induktor (4) enthält, angetrieben wird, **dadurch gekennzeichnet, dass** jede Verpackung von einer Vielzahl an Impulsen beeinflusst wird, dass die Impulse eine feste Länge haben und dass die Zeit zwischen den Impulsen in Abhängigkeit von der Geschwindigkeit der Reihe von Verpackungen (1) variiert.

2. Verfahren nach Anspruch 1, **dadurch gekennzeichnet, dass** ein SPS-System (speicherprogrammiertes Steuerungssystem) (6) verwendet wird, um die Speisung des Induktors (4) mithilfe eines IH(Induktionsheiz-)Generators (5) zu steuern.

3. Verfahren nach Anspruch 2, **dadurch gekennzeichnet, dass** die Informationen bezüglich Geschwindigkeit und Position der Verpackungen (1) an das SPS-System (6) gegeben werden.

4. Verfahren nach Anspruch 3, **dadurch gekennzeichnet, dass** die Informationen bezüglich Geschwindigkeit und Position der Verpackungen (1) mittels eines Motorantriebs (9) und eines Codierers (7) gegeben werden.

5. Verfahren nach einem der vorhergehenden Ansprüche, **dadurch gekennzeichnet, dass** die aufgebrachte Kraft in Abhängigkeit von der Geschwindigkeit eingestellt wird.

6. Verfahren nach einem der vorhergehenden Ansprüche, **dadurch gekennzeichnet, dass** jede Verpackung (1) der Reihe aus Verpackungen (1) die gleiche Länge (lₚ) in Zuführrichtung hat, und dass die Verpackungen (1) durch einen Abstand (lₛ) voneinander getrennt sind.

7. Verfahren nach Anspruch 6, **dadurch gekennzeichnet, dass** die Länge (lᵢ) des Induktors (4) in Zuführrichtung der Verpackungen (1) gleich der Länge (lₚ) einer Verpackung plus die Länge (lₛ) des Abstands zwischen zwei benachbarten Verpackungen (1) ist.

8. Verfahren nach einem der vorhergehenden Ansprüche, **dadurch gekennzeichnet, dass** jede Verpackung eine konstante Versiegelungsenergie über die Länge (lₚ) der Verpackung (1) hinweg erhält.

9. Verfahren nach einem der vorhergehenden Ansprüche, **dadurch gekennzeichnet, dass** die erste Verpackung (1) der Reihe Verpackungen (1) das Versiegelungssystem beim Anlaufen auslöst.

## Revendications

1. Procédé consistant à sceller des emballages (1) au cours d'un mouvement continu, dans lequel une rangée d'emballages (1) est entraînée au moyen d'un moteur (8) à travers un poste de scellage comprenant un inducteur stationnaire (4) entraîné sous forme d'impulsions, **caractérisé en ce que** chaque emballage est affecté par une pluralité d'impulsions, que les impulsions sont de longueur fixe et que le temps entre les impulsions varie suivant la vitesse de la rangée d'emballages (1).

2. Procédé selon la revendication 1, **caractérisé en ce qu'**un système API (6) est utilisé pour commander l'alimentation de l'inducteur (4) au moyen d'un générateur CI (chauffage par induction) (5).

3. Procédé selon la revendication 2, **caractérisé en ce que** des informations concernant la vitesse et la position des emballages (1) sont fournies au système API (6).

4. Procédé selon la revendication 3, **caractérisé en ce que** les informations concernant la vitesse et la position des emballages (1) sont fournies au moyen d'un entraînement par moteur (9) et un codeur (7).

5. Procédé selon l'une quelconque des revendications précédentes, **caractérisé en ce que** la puissance appliquée est réglée suivant la vitesse.

6. Procédé selon l'une quelconque des revendications précédentes, **caractérisé en ce que** chaque emballage (1) de la rangée d'emballages (1) possède la même longueur (lₚ) dans la direction d'avance et que les emballages (1) sont séparés les uns des autres selon une distance (lₛ).

7. Procédé selon la revendication 6, **caractérisé en ce que** la longueur (lᵢ) de l'inducteur (4) dans la direction d'avance des emballages (1) est la même que la longueur (lₚ) d'un emballage plus la longueur (lₛ) de l'espace entre deux emballages adjacents (1).

8. Procédé selon l'une quelconque des revendications précédentes, **caractérisé en ce qu'**une énergie de scellage constante est fournie à chaque emballage sur la longueur entière (lₚ) de l'emballage (1).

9. Procédé selon l'une quelconque des revendications précédentes, **caractérisé en ce que** le premier emballage (1) de la rangée d'emballages (1) déclenche le système de scellage lors du démarrage.
